# EUROPEAN PATENT APPLICATION

(11) **EP 2 387 019 A1**
(43) Date of publication of application: **16.11.2011**
(21) Application number: 11163884.7
(22) Date of filing: 27.04.2011
(51) Int. Cl.: G09B 1/40

(54) **Real time card stunt method**

(30) Priority: 27.04.2010 US 768354
(71) Applicant: Baldwin, Robert E., Auburndale FL 33823 (US); Baldwin, Keith E., Auburndale FL 33823 (US)
(72) Inventor: Baldwin, Robert E., Auburndale FL 33823 (US); Baldwin, Keith E., Auburndale FL 33823 (US)
(74) Representative: Johnson, Yvonne Catherine

(57) **Abstract**

The present invention relates a method of performing a card stunt to present a selected design with a plurality of audience members, each member having a selected location. The method comprises creating bitmap information of the selected design using the members' locations during the stunt; loading the bitmap information onto an internet location, computer or server; audience members receiving the bitmap information for their selected location from the internet, computer or server via a digital transfer; and audience members collectively performing the card stunt at a selected time; wherein each audience member performs the card stunt by utilizing one or more colored object, such that when the audience is viewed as a whole, the colored objects present the selected design.

## Description

A portion of the disclosure of this patent contains material that is subject to copyright protection. The copyright owner has no objection to the reproduction by anyone of the patent document or the patent disclosure as it appears in the Patent and Trademark Office patent files or records, but otherwise reserves all copyright rights whatsoever.

### BACKGROUND OF THE INVENTION

### Field of the Invention

The present invention relates to stadium card stunts. In particular, it relates to a novel method for performing stadium stunts that is more cost effective and allows for a shorter lead time or even real time to achieve the stunt.

### Description of Related Art

A card stunt, which is usually performed in some form of a stadium, is a planned coordinated action wherein audience members each raise a card of a particular color such that when combined create a recognizable image when the entire audience holding the cards are viewed at a distance. While frequently associated with American football games, the stunts have been performed in both indoor and outdoor stadiums for most sports and any event where large audiences can collect. The stunts are not always limited to cards, but things such as tiles, umbrellas, flashlights, reflective surfaces, booklets, and the like, have been utilized for these stunts.

Typically, the process involves laying out a pattern based on the particular seating of a stadium. This can be done manually or as a bitmap on a computer. Next, the particular card, surface, tile, or the like is ordered in the required qualities and quantities for the individual image number of audience members. After receipt of the cards, the cards must be distributed to the individual seats, followed by section coordinators who give instructions to the audience and time the holding up of the cards. The process is not only labor intensive, but takes a great deal of time to accomplish with cueing problems, card placements, and the like. The process works fine with long lead times, but absent the proper lead time, card stunts cannot be done.

### BRIEF SUMMARY OF THE INVENTION

The present invention relates to creating a card stunt wherein the information as to what each location is to be in terms of a card stunt card by loading the information onto a computer or the internet, and allowing the audience member to contact or be contacted by the computer or internet, and being responsible for supplying the appropriate card for the card stunt. The claimed method allows for a lower cost card stunt and can be accomplished quickly and even accomplished in real time.

In particular, the claimed method is beneficial in that the pattern or message does not need to be pre-determined before the arrival of the audience members in their selected locations, in contrast to conventional card stunts where the required arrangement of colored cards needs to be pre-located in the selected locations for the audience members to then raise on cue. Therefore the claimed method allows a real time message, such as a score in a sports game or a rally cry for a particular sports team, to be presented.

The claimed method involves a combination of a digital source device, such as an internet location, computer or server, which is loaded with bitmap information of the selected design using the members location during the stunt, and one or more device for providing audience members with bitmap information for their selected location from the internet, computer or server, via a digital transfer method. This permits a method for performing stadium stunts to be provided that is more cost effective, allows for a shorter lead time to achieve the stunt and even permits the stunt to be effected in real time.

In a first embodiment of the invention, there is a method of performing a card stunt to present a selected design with a plurality of audience members, each member having a selected location comprising:
a) creating bitmap information of the selected design using the members location during the stunt;
b) loading the bitmap information onto an internet location, computer or server;
c) audience members receiving the bitmap information for their selected location from the internet, computer or server; and
d) audience members collectively performing the card stunt at a selected time.

In one such embodiment the members search the internet to find the bitmap information for their selected location.

In one such embodiment the members connect to a server to find the bitmap information for their selected location.

In one such embodiment the members and server are connected for finding the bitmap information via a cell phone message, e-mail or text message sent to each member.

In one such embodiment the bitmap information is created on a computer.

In one such embodiment the card stunt is created in real time.

In one such embodiment the card is a piece of clothing, such as a tee shirt.

In one such embodiment the audience member has multiple cards of different colors.

In one such embodiment the audience member uses body paint as the color for the card stunt.

In one such embodiment the steps a) to d) are carried out after the arrival of the audience members in their selected locations.

In one such embodiment the steps a) to d) are carried out within a timeframe of 30 minutes or less, such as 20 minutes or less, preferably 10 minutes or less, e.g. 5 minutes or less, 4 minutes or less, 3 minutes or less, 2 minutes or less, or 1 minute or less.

In one such embodiment the bitmap information is in the memory of the digital source device in a format such that it can be transferred to each audience member via a digital transfer to one or more receiving device. It may be that each audience member has their own receiving device for providing them with the bitmap information for their selected location from the internet, computer or server via a digital transfer.

In one such embodiment the one or more colored object is selected from: pieces of clothing, including shirts, tee shirts, caps, bibs and ponchos; lights; lights on objects; pieces of paper; body paint; cards; tiles; umbrellas; flashlights; reflective surfaces; and booklets.

In one such embodiment the one or more colored object is selected from: colored objects having multiple colors, including reversible colored objects having a different color on each side, e.g. reversible cards or reversible clothing, including reversible shirts, reversible ponchos and reversible bibs. It may be that the colored objects having multiple colors are objects where the audience member can control a change in color, or a computer or remote operator can control a change in color, e.g. clothing (including shirts, bibs, ponchos and hats) or cards or other objects that can have a controlled change in their color. For example, the object could include lights, such as LEDs, of different colors that can be turned on and off, by the audience member or remotely, to result in the object displaying different colors. The object could include a screen or other flat display that can display different colors. The object could include textiles that can change color, e.g. on response to a stimulus such as pressure.

In one such embodiment each audience member performs the card stunt utilizing multiple objects of different colors. When reference is made to different colors, the multiple objects may each display a completely different color to each other (e.g. there may be red, yellow and blue objects), or there may alternatively or additionally be different shades or different patterns based on the same color. It may be that each audience member performs the card stunt utilizing multiple cards of different colors, e.g., two or more, or three or more, cards of different colors.

In one such embodiment each audience member performs the card stunt by putting on an item of clothing, such as a shirt or a cap, or by holding up a card or cards.

In one such embodiment the audience members search the internet to receive the bitmap information for their selected location.

In one such embodiment the audience members connect to a server to receive the bitmap information for their selected location.

In one such embodiment the audience members and server are connected for receiving the bitmap information via a cell phone message, e-mail or text message sent to each member.

In one such embodiment each audience member has their own receiving device, such as a cell phone, for providing them with the bitmap information for their selected location from the internet, computer or server via a digital transfer.

In a second embodiment of the invention, there is a digital source device that can be used in relation to the method of the first embodiment of the invention, the digital source device being provided with bitmap information of the selected design that has been created using the member's location during the stunt, wherein the bitmap information is in the memory of the digital source device in a format such that it can be transferred to each audience member via a digital transfer to one or more receiving device.

In one such embodiment the digital source device is a server or a computer.

In a third embodiment of the invention, there is a network that can be used in relation to the method of the first embodiment of the invention, the network comprising: a digital source device according to the second embodiment; and one or more receiving device for providing audience members with the bitmap information for their selected location from the internet, computer or server via a digital transfer.

In one such embodiment, each audience member has their own device for providing them with the bitmap information for their selected location from the internet, computer or server via a digital transfer.

In one such embodiment, the device is a cell phone.

In a fourth embodiment of the invention, there is a method of obtaining a digital source device as defined in the second embodiment of the invention, the method comprising: loading bitmap information of the selected design onto the digital source device, wherein the bitmap information is loaded into the memory of the digital source device in a means such that it can be transferred to each audience member via a digital transfer.

In one such embodiment the digital source device is the internet, a computer, or a server.

### BRIEF DESCRIPTION OF THE DRAWINGS

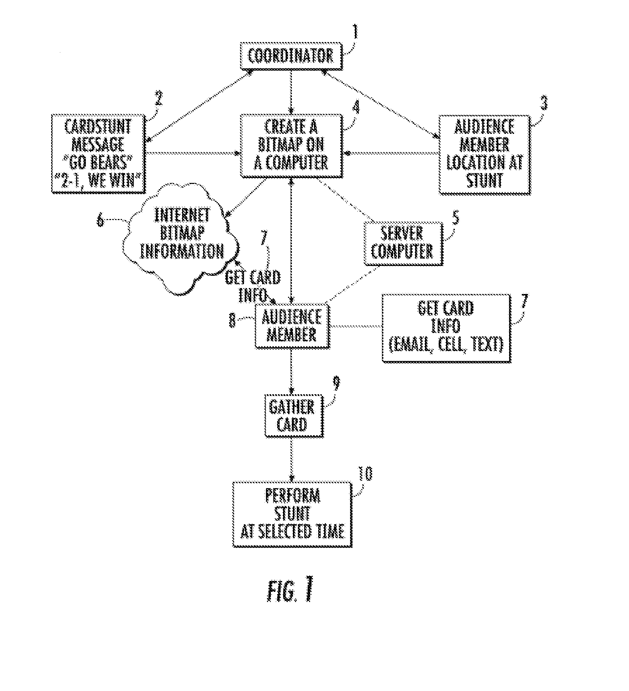

Fig. 1 is a relational map of the method of the present invention.

### DETAILED DESCRIPTION OF THE INVENTION

While this invention is susceptible to embodiment in many different forms, there is shown in the drawings and will herein be described in detail specific embodiments, with the understanding that the present disclosure of such embodiments is to be considered as an example of the principles and not intended to limit the invention to the specific embodiments shown and described. In the description below, like reference numerals are used to describe the same, similar or corresponding parts in the several views of the drawings. This detailed description defines the meaning of the terms used herein and specifically describes embodiments in order for those skilled in the art to practice the invention.

The terms "a" or "an", as used herein, are defined as one or as more than one. The term "plurality", as used herein, is defined as two or as more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

Reference throughout this document to "one embodiment", "certain embodiments", and "an embodiment" or similar terms means that a particular feature, structure, or characteristic described in connection with the embodiment is included in at least one embodiment of the present invention. Thus, the appearances of such phrases or in various places throughout this specification are not necessarily all referring to the same embodiment. Furthermore, the particular features, structures, or characteristics may be combined in any suitable manner in one or more embodiments without limitation.

The term "or" as used herein, is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

The drawing(s) featured in the figures are for the purpose of illustrating certain convenient embodiments of the present invention, and are not to be considered as limitation thereto. Term "means" preceding a present participle of an operation indicates a desired function for which there is one or more embodiments, i.e., one or more methods, devices, or apparatuses for achieving the desired function and that one skilled in the art could select from these or their equivalent in view of the disclosure herein and use of the term "means" is not intended to be limiting.

As used herein the term "card stunt" refers to gathering a number of audience members such as in a stadium, bleachers or the like and each member having a color card such that when the audience is viewed as a whole, the cards merge to present a selected message. As used herein the term "card" refers to an object of a particular color that is used in a card stunt. While cards are the typical card used in stunts, other colored objects, such as tee shirts, lights, lights on objects, caps, bibs, pieces of paper, body paint, poncho or any colored object or piece of clothing that serves the purposes of a card in a card stunt are within the definition of card herein. Cards can be reversible or multiple colors or people can utilize multiple cards. For example, a reversible bib with white on one side and red on another could be utilized.

As used herein a "selected design" refers to a pattern or words selected to create an image in the card stunt manner. Because the present invention shortens the time to prepare and deliver such a message, real time messages can be created. For example, the present game score, comment on a play, message to the opposing team, or the like could virtually instantly be viewed. For example, the audience members could all receive a cell phone call or text message, and put together a message during the game or event. Where each audience member has multiple cards then the selected card could be so indicated.

As used herein the audience member "selected location" means the seating/standing, etc. position in a stadium, bleacher, or the like, or just where a group of people are assigned to gather together where a card stunt could be accomplished. Each position must be known as in all card stunts and the assigned position becomes a "bit" in a bitmap of a particular selected design to be created. Once the location of each bit is known and the design selected, a bitmap information can be created. As used herein "bitmap information" relates to the color of each bit for the card stunt such that when performed, the colored bits create the desired design. The bitmap is created by loading the information onto a computer, server, or the like such that the bitmap information is loaded into memory in a means that it can be transferred to each audience member.

The bitmap information must be loaded to the internet, a computer, server, or the like. By providing the bitmap information on a digital source device, it is easy to create a means for the audience member to see information for their particular bit. The audience member receives the bitmap information from the particular digital machine via any convenient means. Examples include a web site, e-mails, text messaging, cell phone calls and the like. This system allows quick distribution of the bitmap information, even in real time during the audience sporting event or other event. Wireless methods of activation of the card are also contemplated.

Once all the audience members have either gotten their bitmap information or been sent their bitmap information, the audience members can perform the card stunt at a selected time. This is accomplished by putting on a shirt, a cap, holding up a card or cards, or any method for performing a card stunt. In the event a real time stunt or stunts are performed, the audience members can change their card out for a new card as necessary.

Now referring to the drawing for an embodiment of the present invention method, Fig. 1 is a relationship and flow chart. In this embodiment, coordinator 1 is the person, company, or the like, running the particular method of the invention. The coordinator 1 decides on the particular message 2 by any means. Thus, the coordinator could pick the message, the person utilizing the method, the audience, a school sports team or the like. In the particular message 2, there are two examples. First, "go Bears" could be a rally cry for a particular sports team. This type of message could be decided long before the game starts. The other message "2-1, we win" could represent a score in the middle or end of a game, and only be a practical message in real time. As one can see either type message as desired, could be utilized in the present invention. The coordinator 1 also gathers information about the location of each audience member 3 that will be participating in the stunt. As noted above, this could be stadium, bleacher seating, or just a location of a group standing in a field. The coordinator 1 then using a computer program combines the message with the audience member locations to create a bitmap information 4. The bitmap information 4 is created in a digital format and can then be stored on this computer, a server computer, the internet 6, or a combination thereof to make the information for each audience member available. The information can be the particular color of a shirt, card or other item defined above as a "card".

The audience member then can get the bitmap information 7 from the computer, the server, or the internet via a digital transfer method, such as e-mail, cell phone, text message, accessing an internet site, or the like as necessary so that audience member 8 will know what time and what to utilize for the card stunt. The audience member 8 then collects or gathers one or more cards as necessary for the stunt 9 and notes the time, etc. for performing the stunt from the information 7. Then at the appointed time, the audience member 8 performs the stunt 10. The stunt or other stunt can be repeated in the same manner during the desired event either in real time or prepared as necessary.

Other items can be color coordinated with audience members with card stunt. For example, items received at the event, such as tickets, pennants, etc. One can be the same color as the audience member color(s).

The above embodiment is not intended to be limiting, but the applicant reserves the right to utilize the particular embodiment in a limiting fashion. One skilled in the art could understand substitutions and the like in view of the disclosure herein, and such substitutions are intended except where noted otherwise.

## Claims

1. A method of performing a card stunt to present a selected design with a plurality of audience members, each member having a selected location, the method comprising:
a) creating bitmap information of the selected design using the members' locations during the stunt;
b) loading the bitmap information onto an internet location, computer or server;
c) audience members receiving the bitmap information for their selected location from the internet, computer or server via a digital transfer; and
d) audience members collectively performing the card stunt at a selected time,
wherein each audience member performs the card stunt by utilizing one or more colored object, such that when the audience is viewed as a whole, the colored objects present the selected design.

2. A method according to claim 1 wherein the one or more colored object is selected from: pieces of clothing, including tee shirts, caps, bibs and ponchos; lights; lights on objects; pieces of paper; body paint; cards; tiles; umbrellas; flashlights; reflective surfaces; and booklets.

3. A method according to claim 1 or claim 2 wherein the one or more colored object is selected from: colored objects having multiple colors, including reversible colored objects having a different color on each side and objects that can have a controlled change in their color.

4. A method according to any one of the preceding claims wherein each audience member performs the card stunt utilizing multiple objects of different colors.

5. A method according to any one of the preceding claims wherein each audience member performs the card stunt by putting on an item of clothing, such as a shirt or a cap, or by holding up a card or cards.

6. A method according to any one of the preceding claims wherein:
(i) the audience members search the internet to receive the bitmap information for their selected location; or
(ii) the audience members connect to a server to receive the bitmap information for their selected location; or
(iii) the audience members and server are connected for receiving the bitmap information via a cell phone message, e-mail or text message sent to each member.

7. A method according to any one of the preceding claims wherein the bitmap information is created on a computer.

8. A method according to any one of the preceding claims wherein the card stunt is performed in real time.

9. A method according to any one of the preceding claims wherein each audience member has their own receiving device for providing them with the bitmap information for their selected location from the internet, computer or server via a digital transfer.

10. A digital source device for use in carrying out a method of performing a card stunt to present a selected design with a plurality of audience members, each member having a selected location, the digital source device being provided with bitmap information of the selected design that has been created using the member's location during the stunt, wherein the bitmap information is in the memory of the digital source device in a format such that it can be transferred to each audience member via a digital transfer.

11. A digital source device according to claim 10, which is a server or a computer.

12. A network for use in carrying out a method of performing a card stunt to present a selected design with a plurality of audience members, each member having a selected location, the network comprising:
a digital source device according to claim 10 or claim 11; and
one or more receiving device for providing audience members with the bitmap information for their selected location from the internet, computer or server via a digital transfer.

13. A network according to claim 12, wherein each audience member has their own receiving device for providing them with the bitmap information for their selected location from the internet, computer or server via a digital transfer.

14. A network according to claim 12 or claim 13, wherein the receiving device is a
cell phone.

15. A method of providing a digital source device as defined in claim 10 or claim 11,
the method comprising:
loading bitmap information of the selected design onto the digital source device, wherein the bitmap information is loaded into the memory of the digital source device in a format such that it can subsequently be transferred to each audience member via a digital transfer.
